# EUROPEAN PATENT SPECIFICATION

(11) **EP 2 823 656 B1**
(45) Date of publication and mention of the grant of the patent: **08.12.2021**
(21) Application number: 13705452.4
(22) Date of filing: 19.02.2013
(51) Int. Cl.: H04W 12/06, H04L 29/08, H04L 29/06, H04W 8/24, H04W 12/08, H04W 12/00

(54) **ACCESS MODE SELECTION BASED ON USER EQUIPMENT SELECTED ACCESS NETWORK IDENTITY**
ZUGANGSMODUSAUSWAHL AUF BASIS DER VON EINEM BENUTZERGERÄT AUSGEWÄHLTEN ZUGANGSNETZIDENTITÄT
SÉLECTION DE MODE D'ACCÈS BASÉE SUR UN IDENTIFIANT DE RÉSEAU D'ACCÈS SÉLECTIONNÉ D'UN ÉQUIPEMENT D'UTILISATEUR

(30) Priority: 07.03.2012 WO PCT/EP2012/053922
(43) Date of publication of application: 14.01.2015
(73) Proprietor: Nokia Solutions and Networks Oy, 02610 Espoo (FI)
(72) Inventor: KALL, Anders Jan Olof, FI-02730 Espoo (FI); WOLFNER, Gyorgy Tamas, H-1163 Budapest (HU)
(74) Representative: Ruuskanen, Juha-Pekka
(86) International application number: PCT/EP2013/053268
(87) International publication number: WO 2013/131741

(56) References cited:
- EP-A1- 2 400 791
- EP-A2- 2 200 358
- WO-A2-2006/127445
- US-A1- 2009 305 671

## Description

### BACKGROUND:

### Field:

Access mode selection based on user equipment selected access network identity may be useful, for example, with respect to the authentication in third generation partnership project (3GPP) networks of subscribers attaching to a trusted wireless local area network (WLAN) access network (TWAN). More specifically, certain embodiments may be useful with respect to trusted WLAN access without user equipment (UE) impact (SaMOG_wlan) in section 16 of 3GPP TS 23.402 Release 11.

### Description of the Related Art:

In a conventional approach, during access authentication a TWAN forwards the service set identifier (SSID) to a 3GPP authentication, authorization, and accounting (AAA) server, and then the 3GPP AAA server based on the SSID and the subscriber profile can make the decision whether service and system aspects 2a (S3a) access to Evolved Packet System (EPS) or non-seamless offload (NSO) is provided to the UE.

However, in this approach the TWAN has to send the access network identity, for example, the SSID, to the 3GPP AAA server and this would require modifications to the TWAN-AAA Server interface (STa).

Likewise, in this approach, the 3GPP AAA server must be configured to know all relevant SSID related information, despite the fact that there may be numerous different SSIDs in use in a big operator's network. A 3GPP operator may have agreements with WLAN operators to enable the operator's subscriber to access services via the WLAN operator's WiFi hotspot. Thus, this approach requires the configuration of the SSIDs used by the WLAN operator.

EP2400791 discloses an arrangement where a UE is sent an available access authentication mode, which is used by the UE.

WO 2006/127445 discloses a dynamic dual-mode service access control mechanism.

US 2009/305671 discloses a network access control method and apparatus.

EP 2200358 discloses a method and system for negotiating a network access authentication mode for an user equipment.

### SUMMARY:

The invention is defined in the independent claims. Particular embodiments are set out in the dependent claims.

### BRIEF DESCRIPTION OF THE DRAWINGS:

For proper understanding of the invention, reference should be made to the accompanying drawings, wherein:
Figure 1 illustrates a signal flow according to certain embodiments.
Figure 2 illustrates a method according to certain embodiments.
Figure 3 illustrates another method according to certain embodiments.
Figure 4 illustrates a system according to certain embodiments.

### DETAILED DESCRIPTION OF THE PREFERRED EMBODIMENT(S):

Certain embodiments of the present invention are related to authentication in networks, such as 3GPP networks, of subscribers attaching to a trusted WLAN access network (TWAN), more specifically to the solution specified for Trusted WLAN Access without UE impact (SaMOG_wlan) in section 16 of 3GPP TS 23.402 Release-11.

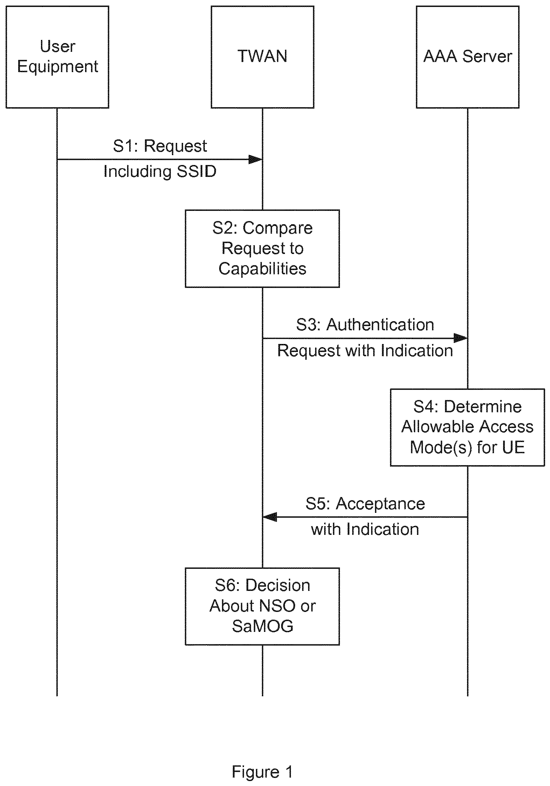

Figure 1 illustrates a signal flow according to certain embodiments. This signal flow illustrates some of the signal exchanges that may occur, but it should be understood that other signal exchanges may also occur, which are not illustrated in the figure.

A user equipment (UE) can use a service set identifier (SSID) to indicate to the network if the UE would like to use a particular access type, such as non-seamless offload (NSO) or trusted WLAN access (SaMOG). For example, a UE at S1 can send a request to a TWAN, and that request can include access network identity, such as an SSID. A WiFi network can advertise (not shown in Figure 1) "Operator_SaMOG" and "Operator_Offload".

The TWAN can, at S2, compare the request from the UE to the capabilities of the TWAN. Then, the TWAN can, at S3, send an authentication request with an indication regarding access network capability. This indication can be implemented various ways. For example, the indication may identify the same advertised capabilities of the TWAN. Alternatively, the indication may identify SaMOG or NSO, depending on what the UE requested in S1, and further depending on whether the TWAN supports what the UE has requested. Thus, depending on which one is selected by the UE, the network can provide NSO or SaMOG service to the UE.

More particularly, a network can provide NSO or SaMOG services to the UE depending on which SSID the user equipment (UE) has selected when attaching to the trusted WLAN access network. This decision can be taken by the AAA Server as informed by the TWAN during the authentication process. Alternatively, in accordance with certain embodiments, the AAA server can, at S5, respond to the TWAN's authentication request with an acceptance and indication of what, if any, access mode is permitted for the UE. To determine what access mode is permitted, the AAA server may, for example, query a Home Subscriber Server (not shown). However, once the AAA server has determined, at S4, whether the mode requested by the TWAN is permitted for the UE, the decision about which access mode to use can be made at S6 by the TWAN based on which access capability was allowed by the AAA Server.

The TWAN and AAA Server, which may be physically separate devices, can thus interoperate in an effective manner.

As mentioned above, the TWAN can include an indication of the TWAN's NSO and/or SaMOG capabilities when sending, at S3, the authentication request for a UE attaching to the trusted WLAN to the 3GPP AAA server. The indicated capabilities of the TWAN can be according to the possible services for the given SSID. Thus, for example, the indicated TWAN capabilities can depend on the SSID selected on the UE. For example, in certain embodiments if the UE selected SSID is "Operator_SaMOG" then the TWAN only indicates SaMOG capability to the 3GPP AAA server. In another alternative, the TWAN may query the AAA server regarding an access mode that has not specifically been requested by the UE. The TWAN could then offer this access mode, if the AAA server indicates it is permitted, to the UE.

In certain embodiments, a 3GPP AAA server only accepts the authentication/authorization request if the UE is allowed services that match the requested capabilities of the network. For example, if the UE requested NSO and the TWAN indicated NSO capability to the AAA server but NSO is not allowed for the user then the authentication fails in certain embodiments.

If the TWAN is capable of both NSO and SaMOG services for a given SSID and indicates both capabilities to the AAA server then there are several possibilities in certain embodiments. First, if the 3GPP AAA server sends back to the TWAN an indication that both NSO and SaMOG services are allowed for the UE, then the TWAN configuration can determine which one to select. This decision may be based on, for example, the current traffic situation in TWAN.

Alternatively, if the 3GPP AAA server selects only one capability, for example, only NSO or only SaMOG, then the AAA Server indicates to the TWAN the single service capability allowed for this UE. The AAA server can determine which capability to select based on subscriber information or AAA configuration.

In certain embodiments, therefore, there is no need to send the SSID to the 3GPP AAA server. Thus, there is no need to modify the STa interface between TWAN and AAA Server. Moreover, in certain embodiments there is no need to have any SSID related information in the 3GPP AAA server. Thus, it is not required for the AAA to handle SSIDs and consequently no need for the AAA server to need to know all possible SSIDs.

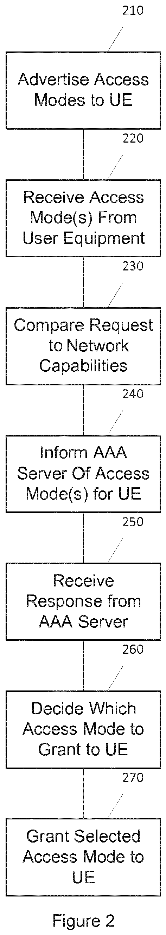

Figure 2 illustrates a method according to certain embodiments. As shown in Figure 2, at 210 a TWAN can advertise supported access modes to devices such as user equipment. Then, at 220, the TWAN can receive an indication of one more access modes from the user equipment. Specifically, the TWAN can receive an access network identity from the user equipment. The access network identity can be or include a service set identifier.

The method can also include, at 230, comparing the information in the request to capabilities of the TWAN. If there is no overlap between the requested access mode(s) and the supported access mode(s), the TWAN can, as one alternative, decide to terminate the process without communicating with the AAA server.

If, however, at least one mode requested by the user equipment is supported by the TWAN, the TWAN can, at 240, inform an authentication server regarding at least one access mode for the user equipment. The TWAN can use an authentication request to inform a AAA server.

At 250, the TWAN can receive a response to the request. Then, at 260, the TWAN can decide which access mode to grant to the user equipment and select a mode of the at least one access mode to use with respect to the user equipment based on the response received from the authentication server in response to the request.

At 270, the method can additionally include granting the access mode to the user equipment when the authentication server indicates that the access mode is permitted for the user equipment.

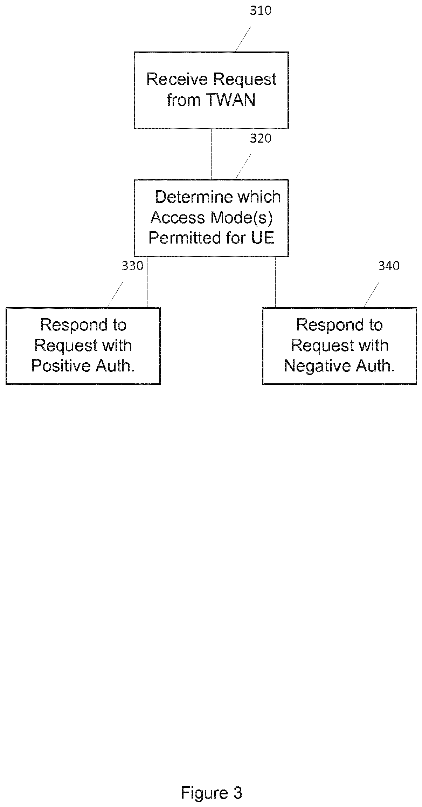

Figure 3 illustrates another method according to certain embodiments. As shown in Figure 3, a method can include, at 310, receiving a request from a TWAN at a AAA server. The request can be or include an authentication request. The method can also include, at 320, determining whether at least one access mode for a user equipment, received in the request, is permitted for the user equipment.

The method can further include, at 330, responding to the request with a successful authentication only when one or more mode of the at least one access mode is permitted for the user equipment. The method can additionally include, at 340, responding to the request with an unsuccessful authentication when the AAA server has determined that no mode of the at least one access mode is permitted for the user equipment.

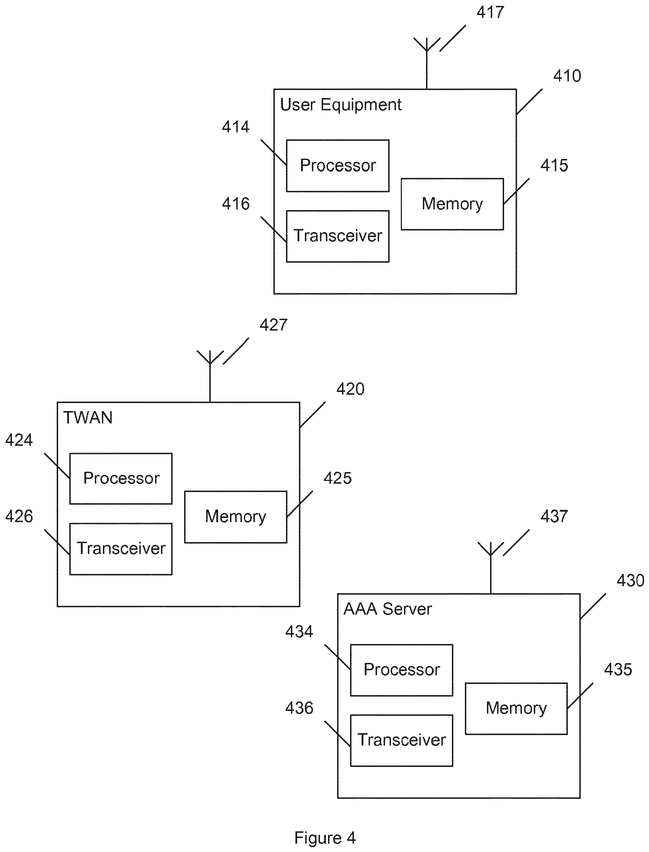

Figure 4 illustrates a system according to certain embodiments. In an example embodiment, a system may include three devices, user equipment (UE) 410, TWAN 420, namely a device of the TWAN, and AAA server 430. Each of the devices 410, 420, and 430 may be equipped with at least one processor (respectively 414, 424, and 434), at least one memory (respectively 415, 425, and 435) (including computer program instructions or code), a transceiver (respectively 416, 426, and 436), and an antenna (respectively 417, 427, and 437). There is no requirement that each of these devices be so equipped. For example, the AAA server 430 may be equipped solely for wired communication.

The transceiver (respectively 416, 426, and 436) can be a transmitter, a receiver, both a transmitter and a receiver, or a unit that is configured both for transmission and reception. The transceiver (respectively 416, 426, and 436) can be coupled to corresponding one or more antenna(s) (respectively 417, 427, and 437), which may include a directional antenna.

The at least one processor (respectively 414, 424, and 434) can be variously embodied by any computational or data processing device, such as a central processing unit (CPU) or application specific integrated circuit (ASIC). The at least one processor (respectively 414, 424, and 434) can be implemented as one or a plurality of controllers.

The at least one memory (respectively 415, 425, and 435) can be any suitable storage device, such as a non-transitory computer-readable medium. For example, a hard disk drive (HDD) or random access memory (RAM) can be used in the at least one memory (respectively 415, 425, and 435). The at least one memory (respectively 415, 425, and 435) can be on a same chip as the corresponding at least one processor (respectively 414, 424, and 434), or may be separate from the corresponding at least one processor (respectively 414, 424, and 434).

The computer program instructions may be any suitable form of computer program code. For example, the computer program instructions may be a compiled or interpreted computer program.

The at least one memory (respectively 415, 425, and 435) and computer program instructions can be configured to, with the at least one processor (respectively 414, 424, and 434), cause a hardware apparatus (for example, user equipment 410 or eNodeB 420) to perform a process, such as any of the processes described herein (see, for example, Figures 1-3).

Thus, in certain embodiments, a non-transitory computer-readable medium can be encoded with computer instructions that, when executed in hardware perform a process, such as one of the processes described herein. Alternatively, certain embodiments of the present invention may be performed entirely in hardware.

The devices of the system may also include additional components. For example, the user equipment 410 can include a user interface that is operable connected to the processor 414 and memory 415. That user interface can include a display, such as a liquid crystal display (LCD) or organic electroluminescent display (OELD), as well as speakers or audio outputs. Tactile outputs, such as a haptic feedback system, can also be included. The user interface may have a touch screen to receive user input. User input can also be provided by a keypad, keyboard, microphone, joystick, mouse, trackball, or other input device. Of course, there is no requirement that any of the devices include a user interface. For example, the user equipment 410 may be a machine to machine type communication device.

One having ordinary skill in the art will readily understand that the invention as discussed above may be practiced with steps in a different order, and/or with hardware elements in configurations which are different than those which are disclosed. Therefore, although the invention has been described based upon these preferred embodiments, it would be apparent to those of skill in the art that certain modifications, variations, and alternative constructions would be apparent, while remaining within the scope of the invention. In order to determine the metes and bounds of the invention, therefore, reference should be made to the appended claims.

## Claims

1. A method, comprising:
informing, by an apparatus (420) in a trusted wireless local area network, in a request, an authentication server (430) regarding at least one access mode for a user equipment (410), wherein the at least one access mode is supported by the trusted wireless local area network;
receiving, by the apparatus (420), a response from the authentication server (430) in response to the request, said response comprising an indication of at least one permitted access mode of the at least one access mode for said user equipment (410);
selecting, by the apparatus (420), an access mode of the at least one access mode to use with respect to the user equipment (410) based on the response received from the authentication server (430) in response to the request; and
granting, by the apparatus (420), the selected access mode to the user equipment (410).

2. The method of claim 1, further comprising:
receiving from a user equipment an access network identity indication, which implicitly or directly indicates an access mode or service set requested by the user equipment,
based on the prerequisite that the access network identity, in which said access network identity may directly or implicitly indicate to the user or the user equipment the access modes available and offered by the network, is broadcasted to the user equipment, and
based on the prerequisite that the user or user equipment selects an access point based on the access network identity broadcasted by the access network to the user equipment.

3. The method of claim 2, wherein the receiving the access network identity includes receiving a service set identifier.

4. The method of claim 1, further comprising:
advertising, to the user equipment, modes supported by the trusted wireless local area network, prior to informing the authentication server.

5. A method, comprising:
determining, in an authentication server (430), whether at least one access mode for a user equipment, received in a request from an apparatus in a trusted wireless local area network, is permitted for the user equipment, wherein the at least one access mode is supported by the trusted wireless local area network; and
responding, by the authentication server, to the request with a successful authentication only when one or more modes of the at least one access mode is permitted for the user equipment, wherein the response comprises an indication of at least one permitted access mode of the at least one access mode for said user equipment;
selecting, by the apparatus in the trusted wireless local area network, an access mode of the at least one access mode to use with respect to the user equipment (410) based on the response received from the authentication server (430) in response to the request; and
granting, by the apparatus in the trusted wireless local area network, the selected access mode to the user equipment.

6. The method of claim 5, further comprising:
receiving the request at the authentication server, wherein the request comprises an authentication request.

7. The method of claim 5, further comprising:
responding by the authentication server to the request with an unsuccessful authentication when no mode of the at least one access mode is permitted for the user equipment.

8. An apparatus (420) in a trusted wireless local area network, comprising:
informing means for informing, in a request, an authentication server regarding at least one access mode for a user equipment, wherein the at least one access mode is supported by the trusted wireless local area network;
receiving means for receiving, a response from the authentication server in response to the request, said response comprising an indication of at least one permitted access mode of the least one access mode for said user equipment;
selecting means for selecting an access mode of the at least one access mode to use with respect to the user equipment based on the response received from the authentication server in response to the request; and
granting means for granting the selected access mode to the user equipment.

9. The apparatus of claim 8, further comprising:
receiving means for receiving from a user equipment an access network identity, wherein the informing is based on the access network identity.

10. The apparatus of claim 9, wherein the receiving the access network identity includes receiving a service set identifier.

11. The apparatus of claim 8, further comprising:
advertising means for advertising, to the user equipment, modes supported by the trusted wireless local area network, prior to informing the authentication server.

12. A system comprising:
a user equipment (410);
the apparatus (420) in the trusted wireless local area network of any of claims 8 to 11; and
an apparatus in an authentication server (430), the apparatus in an authentication server (430) comprising:
determining means for determining whether at least one access mode for the user equipment, received in a request from the apparatus (420) in the trusted wireless local area network, is permitted for the user equipment, wherein the at least one access mode is supported by the trusted wireless local area network; and
responding means for responding to the request with a successful authentication only when one or more modes of the at least one access mode is permitted for the user equipment, wherein the response comprises an indication of at least one permitted access mode of the at least one access mode for said user equipment.

13. The system of claim 12, the apparatus in an authentication server (430) further comprising:
receiving means for receiving the request, wherein receiving the request comprises receiving an authentication request.

14. The system of claim 13, the apparatus in an authentication server (430) further comprising:
responding means for responding to the request with an unsuccessful authentication when no mode of the at least one access mode is permitted for the user equipment.

15. A computer-readable medium comprising instructions which, when executed by an apparatus in a trusted wireless local area network and/or an authentication server, cause the apparatus in the trusted wireless local area network and/or the authentication server to carry out the method of any of claims 1-7.

## Patentansprüche

1. Verfahren umfassend:
Informieren eines Authentifizierungsservers (430) durch eine Vorrichtung (420) in einem vertrauenswürdigen drahtlosen lokalen Netzwerk in einer Anforderung bezüglich mindestens eines Zugangsmodus für ein Benutzergerät (410), wobei der mindestens eine Zugangsmodus von dem vertrauenswürdigen drahtlosen lokalen Netzwerk unterstützt wird;
Empfangen einer Antwort von dem Authentifizierungsserver (430) durch die Vorrichtung (420) als Reaktion auf die Anforderung, wobei die Antwort eine Angabe von mindestens einem zulässigen Zugangsmodus des mindestens einen Zugangsmodus für das Benutzergerät (410) umfasst;
Auswählen eines Zugangsmodus des mindestens einen Zugangsmodus durch die Vorrichtung (420), welcher in Bezug auf das Benutzergerät (410) verwendet werden soll, basierend auf der Antwort, die von dem Authentifizierungsserver (430) als Reaktion auf die Anforderung empfangen wurde; und
Gewähren des gewählten Zugangsmodus durch die Vorrichtung (420) an das Benutzergerät (410).

2. Verfahren nach Anspruch 1, das weiter umfasst:
Empfangen einer Zugangsnetz-Identitätsangabe von einem Benutzergerät, welche implizit oder direkt einen von dem Benutzergerät angeforderten Zugangsmodus oder Dienstsatz angibt,
basierend auf der Voraussetzung, dass die Zugangsnetzidentität, wobei die Zugangsnetzidentität dem Benutzer oder dem Benutzergerät direkt oder implizit die von dem Netzwerk verfügbaren und angebotenen Zugriffsmodi anzeigen kann, an das Benutzergerät gesendet wird, und
basierend auf der Voraussetzung, dass der Benutzer oder das Benutzergerät einen Zugangspunkt basierend auf der Zugangsnetzidentität auswählt, die vom Zugangsnetz an das Benutzergerät gesendet wird.

3. Verfahren nach Anspruch 2, wobei das Empfangen der Zugangsnetzidentität das Empfangen einer Dienstsatzkennung umfasst.

4. Verfahren nach Anspruch 1, das weiter umfasst:
Anzeigen von Modi, die von dem vertrauenswürdigen drahtlosen lokalen Netzwerk unterstützt werden, an das Benutzergerät, bevor der Authentifizierungsserver informiert wird.

5. Verfahren umfassend:
Bestimmen in einem Authentifizierungsserver (430), ob mindestens ein Zugangsmodus für ein Benutzergerät, der in einer Anforderung von einer Vorrichtung in einem vertrauenswürdigen drahtlosen lokalen Netzwerk empfangen wird, für das Benutzergerät zugelassen ist, wobei der mindestens eine Zugangsmodus von dem vertrauenswürdigen drahtlosen lokalen Netzwerk unterstützt wird; und
Beantworten der Anforderung durch den Authentifizierungsserver mit einer erfolgreichen Authentifizierung nur dann, wenn ein oder mehrere Modi des mindestens einen Zugangsmodus für das Benutzergerät zugelassen sind, wobei die Antwort eine Angabe mindestens eines zugelassenen Zugangsmodus des mindestens einen Zugangsmodus für das Benutzergerät umfasst;
Auswählen eines Zugangsmodus des mindestens einen Zugangsmodus durch die Vorrichtung in dem drahtlosen lokalen Netzwerk, welcher in Bezug auf das Benutzergerät (410) verwendet werden soll, basierend auf der Antwort, die von dem Authentifizierungsserver (430) als Reaktion auf die Anforderung empfangen wurde; und
Gewähren des ausgewählten Zugangsmodus durch die Vorrichtung in dem vertrauenswürdigen drahtlosen lokalen Netzwerk an das Benutzergerät.

6. Verfahren nach Anspruch 5, das weiter umfasst:
Empfangen der Anforderung an dem Authentifizierungsserver, wobei die Anforderung eine Authentifizierungsanforderung umfasst.

7. Verfahren nach Anspruch 5, das weiter umfasst:
Beantworten durch den Authentifizierungsserver der Anforderung mit einer erfolglosen Authentifizierung, wenn kein Modus des mindestens einen Zugangsmodus für das Benutzergerät zugelassen ist.

8. Vorrichtung (420) in einem vertrauenswürdigen drahtlosen lokalen Netzwerk, umfassend:
Informationsmittel zum Informieren eines Authentifizierungsservers in einer Anforderung bezüglich mindestens eines Zugangsmodus für ein Benutzergerät, wobei der mindestens eine Zugangsmodus von dem vertrauenswürdigen drahtlosen lokalen Netzwerk unterstützt wird;
Empfangsmittel zum Empfangen einer Antwort von dem Authentifizierungsserver als Reaktion auf die Anforderung, wobei die Antwort eine Angabe von mindestens einem zulässigen Zugangsmodus des mindestens einen Zugangsmodus für das Benutzergerät umfasst;
Auswahlmittel zum Auswählen eines Zugangsmodus des mindestens einen Zugangsmodus, welcher in Bezug auf das Benutzergerät verwendet werden soll, basierend auf der Antwort, die von dem Authentifizierungsserver als Reaktion auf die Anforderung empfangen wurde; und
Gewährungsmittel zum Gewähren des gewählten Zugangsmodus an das Benutzergerät.

9. Vorrichtung nach Anspruch 8, die weiter umfasst:
Empfangsmittel zum Empfangen einer Zugangsnetzidentität von einem Benutzergerät, wobei das Informieren auf der Zugangsnetzidentität basiert.

10. Vorrichtung nach Anspruch 9, wobei das Empfangen der Zugangsnetzidentität das Empfangen einer Dienstsatzkennung umfasst.

11. Vorrichtung nach Anspruch 8, die weiter umfasst:
Anzeigemittel zum Anzeigen von Modi, die von dem vertrauenswürdigen drahtlosen lokalen Netzwerk unterstützt werden, an das Benutzergerät, bevor der Authentifizierungsserver informiert wird.

12. System umfassend:
ein Benutzergerät (410);
die Vorrichtung (420) in dem vertrauenswürdigen drahtlosen lokalen Netzwerk nach einem der Ansprüche 8 bis 11; und
eine Vorrichtung in einem Authentifizierungsserver (430), wobei die Vorrichtung in einem Authentifizierungsserver (430) umfasst:
Bestimmungsmittel zum Bestimmen, ob mindestens ein Zugangsmodus für das Benutzergerät, der in einer Anforderung von der Vorrichtung in einem vertrauenswürdigen drahtlosen lokalen Netzwerk empfangen wird, für das Benutzergerät zugelassen ist, wobei der mindestens eine Zugangsmodus von dem vertrauenswürdigen drahtlosen lokalen Netzwerk unterstützt wird; und
Antwortmittel zum Beantworten der Anforderung mit einer erfolgreichen Authentifizierung nur dann, wenn einer oder mehrere Modi des mindestens einen Zugangsmodus für das Benutzergerät zugelassen ist, wobei die Antwort eine Angabe von mindestens einem zugelassenen Zugangsmodus des mindestens einen Zugangsmodus für das Benutzergerät umfasst.

13. System nach Anspruch 12, wobei die Vorrichtung in einem Authentifizierungsserver (430) weiter umfasst:
Empfangsmittel zum Empfangen der Anforderung, wobei das Empfangen der Anforderung das Empfangen einer Authentifizierungsanforderung umfasst.

14. System nach Anspruch 13, wobei die Vorrichtung in einem Authentifizierungsserver (430) weiter umfasst:
Antwortmittel zum Beantworten der Anforderung mit einer erfolglosen Authentifizierung, wenn kein Modus des mindestens einen Zugangsmodus für das Benutzergerät zugelassen ist.

15. Computerlesbares Medium, das Befehle umfasst, die bei Ausführung durch eine Vorrichtung in einem vertrauenswürdigen drahtlosen lokalen Netzwerk und/oder einem Authentifizierungsserver die Vorrichtung in dem vertrauenswürdigen drahtlosen lokalen Netzwerk und/oder den Authentifizierungsserver veranlassen, das Verfahren nach einem der Ansprüche 1 bis 7 auszuführen.

## Revendications

1. Procédé, comprenant :
l'information, par un appareil (420) dans un réseau local sans fil de confiance, dans une demande, d'un serveur d'authentification (430) au sujet d'au moins un mode d'accès pour un équipement utilisateur (410), dans lequel l'au moins un mode d'accès est pris en charge par le réseau local sans fil de confiance ;
la réception, par l'appareil (420), d'une réponse en provenance du serveur d'authentification (430) en réponse à la demande, ladite réponse comprenant une indication d'au moins un mode d'accès autorisé de l'au moins un mode d'accès pour ledit équipement utilisateur (410) ;
la sélection, par l'appareil (420), d'un mode d'accès de l'au moins un mode d'accès à utiliser par rapport à l'équipement utilisateur (410) sur la base de la réponse reçue en provenance du serveur d'authentification (430) en réponse à la demande ; et
l'attribution, par l'appareil (420), du mode d'accès sélectionné à l'équipement utilisateur (410).

2. Procédé selon la revendication 1, comprenant en outre :
la réception en provenance d'un équipement utilisateur d'une indication d'identité de réseau d'accès qui indique implicitement ou directement un mode d'accès ou un ensemble de services demandé par l'équipement utilisateur,
sur la base du prérequis selon lequel l'identité de réseau d'accès, où ladite identité de réseau d'accès peut indiquer directement ou implicitement à l'utilisateur ou l'équipement utilisateur le mode d'accès disponible et proposé par le réseau, est diffusée à l'équipement utilisateur, et
sur la base du prérequis selon lequel l'utilisateur ou l'équipement utilisateur sélectionne un point d'accès sur la base de l'identité de réseau d'accès diffusée par le réseau d'accès à l'équipement utilisateur.

3. Procédé selon la revendication 2, dans lequel la réception de l'identité de réseau d'accès inclut la réception d'un identifiant d'ensemble de services.

4. Procédé selon la revendication 1, comprenant en outre :
l'annonce, à l'équipement utilisateur, de modes pris en charge par le réseau local sans fil de confiance, avant d'informer le serveur d'authentification.

5. Procédé, comprenant :
la détermination, dans un serveur d'authentification (430), du fait qu'au moins un mode d'accès pour un équipement utilisateur, reçu dans une demande en provenance d'un appareil dans un réseau local sans fil de confiance, est ou n'est pas autorisé pour l'équipement utilisateur, dans lequel l'au moins un mode d'accès est pris en charge par le réseau local sans fil de confiance ; et
la réponse, par le serveur d'authentification, à la demande avec une authentification réussie uniquement lorsqu'un ou plusieurs modes de l'au moins un mode d'accès sont autorisés pour l'équipement utilisateur, dans lequel la réponse comprend une indication d'au moins un mode d'accès autorisé de l'au moins un mode d'accès pour ledit équipement utilisateur ;
la sélection, par l'appareil dans le réseau local sans fil de confiance, d'un mode d'accès de l'au moins un mode d'accès à utiliser par rapport à l'équipement utilisateur (410) sur la base de la réponse reçue en provenance du serveur d'authentification (430) en réponse à la demande ; et
l'attribution, par l'appareil dans le réseau local sans fil de confiance, du mode d'accès sélectionné à l'équipement utilisateur.

6. Procédé selon la revendication 5, comprenant en outre :
la réception de la demande au niveau du serveur d'authentification, dans lequel la demande comprend une demande d'authentification.

7. Procédé selon la revendication 5, comprenant en outre :
la réponse par le serveur d'authentification à la demande avec une authentification réussie lorsque aucun mode de l'au moins un mode d'accès n'est autorisé pour l'équipement utilisateur.

8. Appareil (420) dans un réseau local sans fil de confiance, comprenant :
des moyens d'information pour informer, dans une demande, un serveur d'authentification au sujet d'au moins un mode d'accès pour un équipement utilisateur, dans lequel l'au moins un mode d'accès est pris en charge par le réseau local sans fil de confiance ;
des moyens de réception pour recevoir une réponse en provenance du serveur d'authentification en réponse à la demande, ladite réponse comprenant une indication d'au moins un mode d'accès autorisé de l'au moins un mode d'accès pour ledit équipement utilisateur ;
des moyens de sélection pour sélectionner un mode d'accès de l'au moins un mode d'accès à utiliser par rapport à l'équipement utilisateur sur la base de la réponse reçue en provenance du serveur d'authentification en réponse à la demande ; et
des moyens d'attribution pour attribuer le mode d'accès sélectionné à l'équipement utilisateur.

9. Appareil selon la revendication 8, comprenant en outre :
des moyens de réception pour recevoir en provenance d'un équipement utilisateur une identité de réseau d'accès, dans lequel l'information est basée sur l'identité de réseau d'accès.

10. Appareil selon la revendication 9, dans lequel la réception de l'identité de réseau d'accès inclut la réception d'un identifiant d'ensemble de services.

11. Appareil selon la revendication 8, comprenant en outre :
des moyens d'annonce pour annoncer, à l'équipement utilisateur, des modes pris en charge par le réseau local sans fil de confiance, avant d'informer le serveur d'authentification.

12. Système comprenant :
un équipement utilisateur (410) ;
l'appareil (420) dans le réseau local sans fil de confiance selon l'une quelconque des revendications 8 à 11 ; et
un appareil dans un serveur d'authentification (430), l'appareil dans un serveur d'authentification (430) comprenant :
des moyens de détermination pour déterminer si au moins un mode d'accès pour l'équipement d'utilisateur, reçu dans une demande en provenance de l'appareil (420) dans le réseau local sans fil de confiance, est ou n'est pas autorisé pour l'équipement utilisateur, dans lequel l'au moins un mode d'accès est pris en charge par le réseau local sans fil de confiance ; et
des moyens de réponse pour répondre à la demande avec une authentification réussie uniquement lorsqu'un ou plusieurs modes de l'au moins un mode d'accès sont autorisés pour l'équipement utilisateur, dans lequel la réponse comprend une indication d'au moins un mode d'accès autorisé de l'au moins un mode d'accès pour ledit équipement utilisateur.

13. Système selon la revendication 12, l'appareil dans un serveur d'authentification (430) comprenant en outre :
des moyens de réception pour recevoir la demande, dans lequel la réception de la demande comprend la réception d'une demande d'authentification.

14. Système selon la revendication 13, l'appareil dans un serveur d'authentification (430) comprenant en outre :
des moyens de réponse pour répondre à la demande avec une authentification non réussie lorsque aucun mode de l'au moins un mode d'accès n'est autorisé pour l'équipement utilisateur.

15. Support lisible par ordinateur comprenant des instructions qui, lorsqu'elles sont exécutées par un appareil dans un réseau local sans fil de confiance et/ou un serveur d'authentification, amènent l'appareil dans le réseau local sans fil de confiance et/ou le serveur d'authentification à réaliser le procédé selon l'une quelconque des revendications 1 à 7.
